(19) **Europäisches Patentamt**
**European Patent Office**
**Office européen des brevets**

(11) **EP 2 768 261 A1**

(12) **EUROPEAN PATENT APPLICATION**
published in accordance with Art. 153(4) EPC

(43) Date of publication:
**20.08.2014 Bulletin 2014/34**

(21) Application number: **12840021.5**

(22) Date of filing: **17.08.2012**

(51) Int Cl.:
**H04W 52/02** (2009.01)   **H04W 4/04** (2009.01)
**H04W 72/04** (2009.01)

(86) International application number:
**PCT/JP2012/070887**

(87) International publication number:
**WO 2013/054591 (18.04.2013 Gazette 2013/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2011  JP 2011224343**

(71) Applicant: **NTT DOCOMO, INC.**
**Tokyo 100-6150 (JP)**

(72) Inventors:
  • **TAKEDA, Kazuaki**
    **Tokyo 100-6150 (JP)**

  • **ABETA, Sadayuki**
    **Tokyo 100-6150 (JP)**
  • **SAGAE, Yuta**
    **Tokyo 100-6150 (JP)**
  • **KIYOSHIMA, Kohei**
    **Tokyo 100-6150 (JP)**

(74) Representative: **HOFFMANN EITLE**
**Patent- und Rechtsanwälte**
**Arabellastrasse 4**
**81925 München (DE)**

(54) **WIRELESS COMMUNICATION SYSTEM, WIRELESS BASE STATION DEVICE, MACHINE-TO-MACHINE COMMUNICATION TERMINAL, AND WIRELESS COMMUNICATION METHOD**

(57)    The present invention is designed to make it possible to reduce the cost required for a machine communication terminal when the network domain of the machine communication system employs an LTE system. With the radio communication method of the present invention, a radio base station apparatus allocates downlink signals to a machine communication terminal in a predetermined cycle and transmits the allocated downlink signals to the machine communication terminal, and the machine communication terminal receives downlink signals from the radio base station apparatus in the predetermined cycle and demodulates the downlink signals received in the predetermined cycle.

FIG. 3A

FIG. 3B

**Description**

Technical Field

The present invention relates to a radio communication system, a radio base station apparatus, a machine communication terminal and a radio communication method that are applicable to a machine communication system.

Background Art

In recent years, technologies related to machine communication (machine-to-machine communication), in which services are provided by autonomous communication between devices, have been under development. The European Telecommunications Standards Institute (ETSI) defines three domains -- namely, the application domain, the network domain, and the device domain -- as a machine communication system reference model. Of these, in the device domain, applications for lifeline control covering electricity, gas and water, highway traffic system (Intelligent Transport System (ITS)), and so on are already under study for practical use.
In the network domain, a cellular system that is based on the provisions of the 3GPP (3rd Generation Partnership Project) is a promising candidate to be employed. Consequently, also with the 3GPP, there is ongoing activity to standardize machine communication, which is defined as "MTC (Machine Type Communication)" (non-patent literature 1).

Citation List

Non-Patent Literature

Non-Patent Literature 1: 3GPP, TS 22. 368 (V10.5.0), "MTC Communication Aspects", Jun. 2011

Summary of the Invention

Technical Problem

Now, in LTE (Long Term Evolution), which is agreed upon in the 3GPP, it is possible to achieve a transmission rate of about maximum 300 Mbps on the downlink and about 75 Mbps on the uplink, by using a variable band that ranges from 1.4 MHz to 20 MHz. However, MTC is under study on the premise of a communication environment that is comparatively slow, and problems might occur if the LTE system (including Rel. 8/9/10 and later versions) is applied as is to MTC. The requirements for the MTC system are, for example, 118.4 kbps for the downlink and 59.2 kbps for the uplink, which are not as high as for the LTE system. Consequently, when a radio communication terminal (hereinafter referred to as "machine communication terminal") that is customized for the MTC system tries to satisfy the requirements for the LTE system, the radio communication terminal would be over-engineered and its cost of manufacturing would increase.
The present invention has been made in view of the above, and it is therefore an object of the present invention to provide a radio communication system, a radio base station apparatus, a machine communication terminal and a radio communication method which can reduce the cost required for a machine communication terminal when the network domain of the machine communication system employs the LTE system.

Solution to Problem

A radio communication system according to the present invention includes a radio base station apparatus and a machine communication terminal that performs machine communication with the radio base station apparatus, and, in this radio communication system: the radio base station apparatus has: an allocation section configured to allocate downlink signals to the machine communication terminal in a predetermined cycle; and a transmission section configured to transmit the allocated downlink signals to the machine communication terminal; and the machine communication terminal has: a receiving section configured to receive the downlink signals from the radio base station apparatus in the predetermined cycle; and a demodulation section configured to demodulate the downlink signals received in the predetermined cycle.
A radio base station apparatus according to the present invention includes: an allocation section configured to allocate downlink signals to a machine communication terminal that performs machine communication, in a predetermined cycle; and a transmission section configured to transmit the allocated downlink signals to the machine communication terminal.

A machine communication terminal according to the present invention includes a receiving section configured to receive downlink signals from a radio base station apparatus in a predetermined cycle; and a demodulation section configured to demodulate the downlink signals received in the predetermined cycle.

A radio communication method according to the present invention is a radio communication method in a radio communication system including a radio base station apparatus and a machine communication terminal that performs machine communication with the radio base station apparatus, and this radio communication method includes the steps of: at the radio base station apparatus: allocating downlink signals to the machine communication terminal in a predetermined cycle; and transmitting the allocated downlink signals to the machine communication terminal; and at the machine communication terminal: receiving the downlink signals from the radio base station apparatus in the predetermined cycle; and demodulating the downlink signals received in the predetermined cycle.

Technical Advantage of the Invention

According to the present invention, when the network domain of the machine communication system employs the LTE system, it is possible to reduce the cost required for a machine communication terminal.

Brief Description of the Drawings

FIG. 1 is a diagram to explain a configuration of a radio communication system according to an embodiment of the present invention;

FIG. 2 provides diagrams to explain a communication method in a radio communication system according to an embodiment of the present invention;

FIG. 3 provides diagrams to explain a cycle of communication for a machine communication terminal in a radio communication system according to an embodiment of the present invention;

FIG. 4 is a functional block diagram to show an overall configuration of a radio base station apparatus according to an embodiment of the present invention;

FIG. 5 is a functional block diagram to show a baseband processing section of a radio base station apparatus according to an embodiment of the present invention;

FIG. 6 is a functional block diagram to show an overall configuration of a machine communication terminal according to an embodiment of the present invention; and

FIG. 7 is a functional block diagram of a baseband processing section of a machine communication terminal according to an embodiment of the present invention.

Description of Embodiments

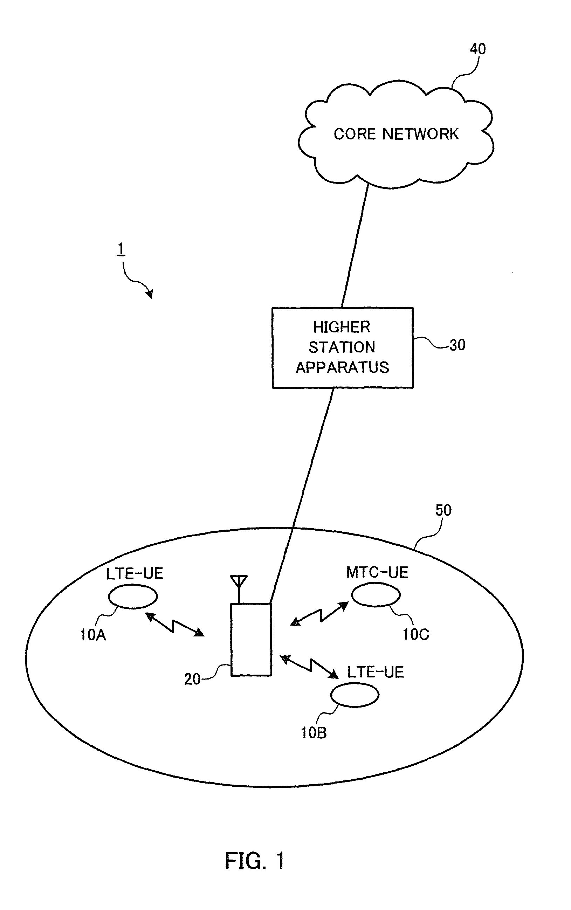

Now, embodiments of the present invention will be described below in detail with reference to the accompanying drawings. First, a radio communication system according to the present embodiment will be described with reference to FIG. 1. The radio communication system shown in FIG. 1 is an example of employing the LTE system in the network domain of the machine communication system. This radio communication system includes at least a radio base station apparatus and a machine communication terminal that performs machine communication with this radio base station apparatus, and furthermore includes a user terminal that is wirelessly connected with this radio base station apparatus for signal communication.

A radio communication system to support LTE-Advanced (Rel. 10) employs carrier aggregation, which uses a plurality of fundamental frequency blocks, where one unit is maximum 20 MHz, to extend the system band up to maximum 100 MHz for both the downlink and the uplink. In the following description, assume that the LTE system is set in a system band of maximum 20 MHz for both the downlink and the uplink.

As shown in FIG. 1, a radio communication system 1 is configured to include a radio base station apparatus 20 and a plurality of radio communication terminals 10A, 10B and 10C that communicate with this radio base station apparatus 20. For example, the radio communication terminal 10C is a machine communication terminal (MTC-UE) to serve as a communication device in a machine communication system, and the other radio communication terminals 10A and 10B are mobile terminal apparatuses (hereinafter referred to as "LTE terminals" (LTE-UEs)) to support the LTE system (including Rel. 10 and later versions). The radio base station apparatus 20 is connected with a higher station apparatus 30, and this higher station apparatus 30 is connected with a core network 40. The plurality of radio communication terminals 10A, 10B and 10C are able to communicate with the radio base station apparatus 20 in a cell 50. Note that the higher station apparatus 30 includes, for example, an access gateway apparatus, a radio network controller (RNC), a mobility management entity (MME) and so on, but is by no means limited to these.

Although the radio communication system 1 applies, as radio access schemes, OFDMA (Orthogonal Frequency Division Multiple Access) to the downlink and SC-FDMA (Single-Carrier Frequency-Division Multiple Access) to the uplink, the radio access schemes are by no means limited to these. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands. The LTE terminals have communication capacity, which can support maximum 20 MHz on both the downlink and the uplink.

Here, channel configurations in the LTE system will be described. The downlink channel configurations include a PDSCH (Physical Downlink Shared Channel), which is used by a plurality of LTE terminals on a shared basis as a downlink data channel, and a PDCCH (Physical Downlink Control Channel), which is a downlink control channel. Transmission data and higher control information are transmitted by the PDSCH. By the PDCCH, downlink control information (DL assignment), including PDSCH scheduling information, and uplink control information (UL grant), including PUSCH scheduling information, are transmitted. Besides these, the downlink channel configurations include a PCFICH (Physical Control Format Indicator Channel), a PHICH (Physical Hybrid-ARQ Indicator Channel) and so on. The PCFICH reports CFI values, which show how many symbols from the first symbol of a subframe are allocated the PDCCH. The PDSCH is allocated to the time region after the last symbol where the PDCCH is allocated, to the last symbol of that subframe.

The uplink channel configurations include a PUSCH (Physical Uplink Shared Channel), which is used by a plurality of LTE terminals on a shared basis as an uplink data channel, and a PUCCH (Physical Uplink Control Channel), which is an uplink control channel. By means of this PUSCH, uplink transmission data and ACK/NACK are transmitted. Furthermore, downlink radio quality information (CQI: Channel Quality Indicator), ACK/NACK, and so on are transmitted by the PUCCH. Besides these, the uplink channel configurations define a PRACH (Physical Random Access Channel). The PRACH is used to transmit random access preambles and so on.

When an LTE system having such channel configurations is applied to MTC, from the perspective of reducing the cost of a machine communication terminal, it is especially effective to make the downlink maintain receiving performance to be able to support a communication band that matches LTE terminals and make the uplink have transmission performance to be able to support only a narrow band compared to LTE terminals.

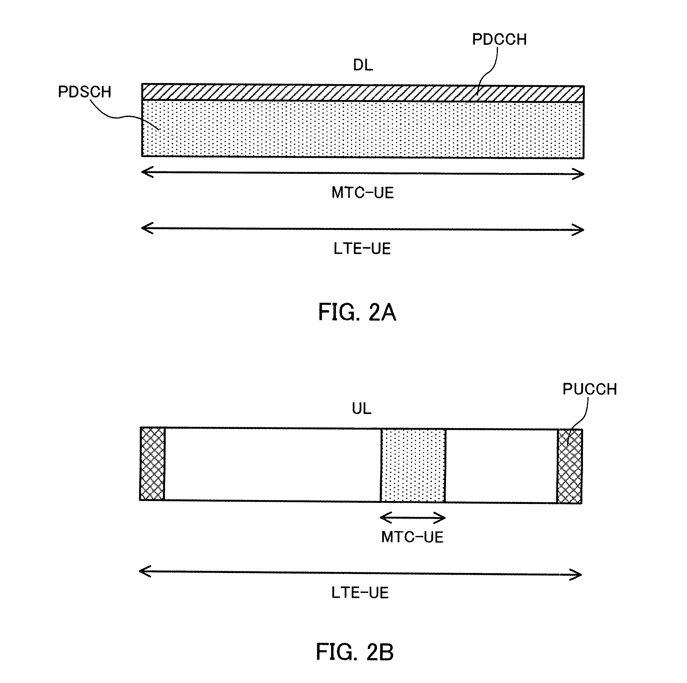

FIG. 2 is a diagram to explain downlink receiving performance and uplink transmission performance of a machine communication terminal. FIG. 2A shows downlink receiving performance of a machine communication terminal. Like the LTE-UEs 10A and 10B, the MTC-UE 10C is illustrated to have receiving performance to be able to support a 20 MHz system band. That is, similar to the LTE-UEs 10A and 10B, the MTC-UE 10C receives and decodes the PDCCH over the entire band of 20 MHz, and receives the PDSCH on the basis of the downlink control information included in the decoded PDCCH.

FIG. 2B shows uplink transmission performance of a machine communication terminal. The band that the MTC-UE 10C is able to support on the uplink is limited to a band that is the same as the band (20 MHz) where the LTE-UEs 10A and 10B are capable of uplink communication, or to a band that is narrower than that. When the uplink band is limited, the LTE-UEs 10A and 10B transmit uplink control signals by the PUCCHs arranged at both ends of the system band (20 MHz), but as for the MTC-UE 10C, the PUCCH is not arranged at either end of the PUSCH_MTC. The LTE-UEs 10A and 10B transmit hybrid ARQ acknowledgements, CQIs that assist downlink channel-dependent scheduling, and resource requests for uplink data transmission by the PUCCH. By contrast, the MTC-UE 10C transmits these signals by the PUSCH.

To alleviate the impact on the LTE system, the size of the PUSCH for the MTC-UE 10C is preferably made one of 1.4 MHz, 3 MHz, 5 MHz, 10 MHz and 15 MHz, which are supported in the LTE system. Alternatively, a bandwidth of 1.08 MHz, which matches the band of the PRACH, may be applied as well. However, the applicable bandwidth is by no means limited to these.

As described above, the requirements of the MTC system are low peak data rates, such as 118.4 kbps on the downlink and 59.2 kbps on the uplink. Moreover, the communication environment of an MTC-UE in the MTC system does not change from time to time. Consequently, a radio base station apparatus is able to reduce the time for receiving processes and the time for signal processing in the MTC-UE, by limiting the frame periods to transmit downlink signals. By this means, it is possible to reduce the battery consumption in the MTC-UE, and reduce the cost required for the MTC-UE.

With the present invention, the MTC-UE receives downlink signals (downlink signals that are transmitted in a predetermined cycle) in the frame periods limited in the radio base station apparatus. In this case, the MTC-UE monitors downlink signals only in the frame periods of a predetermined cycle. That is to say, given downlink signals that are transmitted from a radio base station apparatus in frame periods of a predetermined cycle, the MTC-UE monitors the frame periods of the predetermined cycle and executes signal processing (signal processing such as demodulation, decoding) in these frame periods. In other words, outside the frame periods of the predetermined cycle, signal processing such as demodulation and decoding of downlink signals (including blind decoding of the PDCCH) is not executed. In this way, by reducing the signal processing periods, it is possible to reduce the battery consumption of the MTC-UE compared to the case of executing signal processing in all frame periods, so that it is possible to reduce the cost required for the MTC-UE.

Here, a frame period to transmit downlink signals from a radio base station apparatus means, for example, a subframe, a radio frame and/or the like. Moreover, the downlink signals include signals such as the PDCCH signal, the PDSCH signal.

A predetermined cycle can be determined by, for example, using system frame numbers (SFNs) (0-1023). To be more specific, a predetermined cycle can be determined using following equation 1:

[Formula 1]

$$\left( SFN \times 10 + \left\lfloor n_s / 2 \right\rfloor \right) \bmod N = M \qquad . \quad . \quad . \quad (\text{Equation } 1)$$

Here, N is the cycle downlink signals are transmitted, M is the offset in subframe units, and $n_s$ is the slot number.

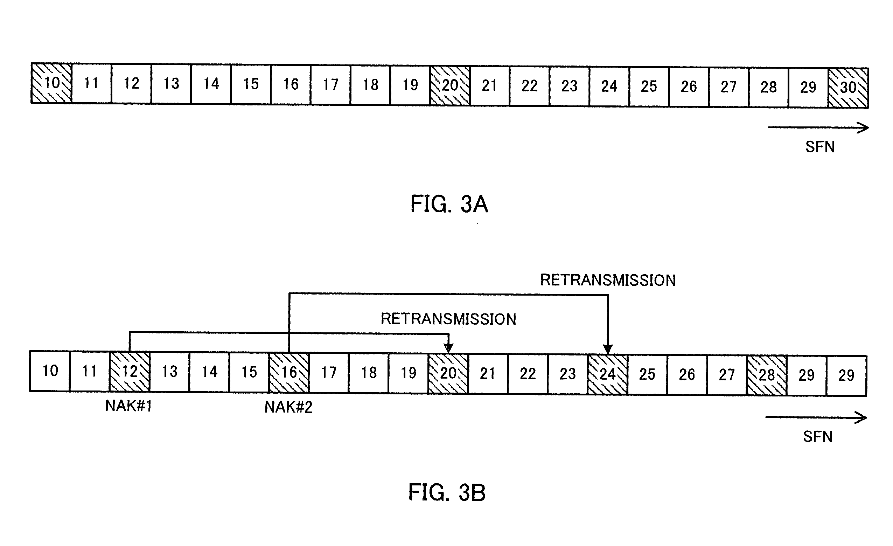

FIG. 3A is a diagram to show a case where N=10 and M=0 in above equation 1. The horizontal axis in FIG. 3A represents the time axis, where one unit period represents a subframe. Additionally, the numbers assigned to the subframes are SFNs. Consequently, in the setting shown in FIG. 3A, a radio base station apparatus transmits downlink signals to the MTC-UE every ten subframes, and the MTC-UE receives downlink signals every ten subframes, receives the subframes of the oblique-line parts shown in FIG. 3A, and demodulates and decodes these downlink signals.

The cycle (M and N in equation 1) in which downlink signals are transmitted from the radio base station apparatus to the MTC-UE may be determined in advance by the standard specification, or may also be determined in a radio base station apparatus. When this cycle is determined in a radio base station apparatus, the radio base station apparatus determines the cycle using, for example, above equation 1. Note that the lower limit value of N is determined by the performance of the MTC-UE, and is preferably set to be large to a certain degree. The radio base station apparatus allocates radio resources to transmit downlink signals to the MTC-UE in the determined cycle.

When this cycle is determined in a radio base station apparatus, information related to the cycle, including the cycle (M and N in equation 1) of transmitting downlink signals to an MTC-UE, may be reported from the radio base station apparatus to the MTC-UE by higher layer signaling.

The cycle of transmitting downlink signals may depend on the terminal capability of the MTC-UE, so that, the MTC-UE may report the terminal capability information of the subject terminal to the radio base station apparatus by higher layer signaling, and the radio base station apparatus may determine the cycle based on the terminal capability information. For example, when the MTC-UE reports the category of the subject terminal to the radio base station apparatus, and, in accordance with this category (for example, when the category is 0), downlink signals are allocated to radio resources in a predetermined cycle in this control.

In this way, when a radio base station apparatus controls downlink signal transmission in a predetermined cycle, it is necessary to report synchronization signals (primary synchronization signal/secondary synchronization signal) to the MTC-UE at the beginning of communication and so on, and therefore it is preferable to report such information required for communication (information about the transmission positions of the synchronization signals and so on) from the radio base station apparatus to the MTC-UE by higher layer signaling.

In this control, a multiple of the predetermined cycle and the cycle of hybrid ARQ (Automatic Repeat reQuest: HARQ) are preferably the same. For example, in FIG. 3B, the predetermined cycle is four subframes, and downlink signals are allocated to the MTC-UEs every four subframes. That is to say, double the predetermined cycle becomes the same as the HARQ cycle (the same as the HARQ cycle in the case where M=0 when N=8, M=0, 4). When such allocation is set up, if, for example, a retransmission request (NAK #1) is issued in SFN=12, data to correspond to NAK #1 is retransmitted in SFN=20, which is eight subframes later. When a retransmission request (NAK #2) is issued in SFN=16, data to correspond to NAK #2 is retransmitted in SFN=24, which is eight subframes after. SFN=20 and SFN=24 are radio resources where downlink signals are allocated for the MTC-UE, so that the MTC-UE is able to receive the retransmissions without using (that is, without monitoring) the unallocated subframes. Consequently, it is possible to reduce the soft buffer field (memory field) to store data (that is, reduce the number of HARQ processes). In the case of FIG. 3B, it is possible to reduce the number of HARQ processes to two (which equals the number of M). By this means, it is possible to reduce the memory field in the MTC-UE, and reduce the cost required for the MTC-UE.

In this case, the soft buffer field may depend on the terminal capability of the MTC-UE, and therefore, the MTC-UE may report the terminal capability information (soft buffer field) of the subject terminal to the radio base station apparatus by higher layer signaling, and the radio base station apparatus may determine the predetermined cycle based on the terminal capability information.

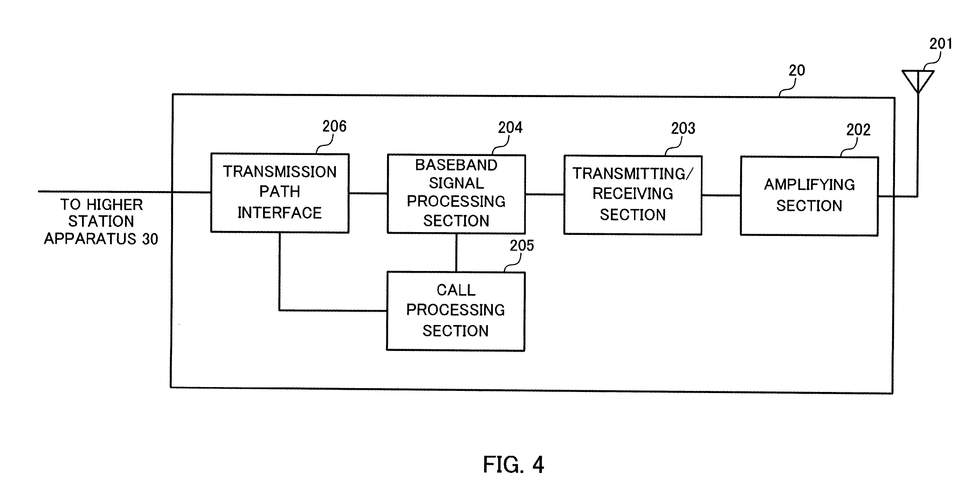

Now, referring to FIG. 4, an overall configuration of the radio base station apparatus 20 according to the present embodiment will be explained. The radio base station apparatus 20 performs machine communication with an MTC-UE and is wirelessly connected with a user terminal (LTE-UE) for signal communication. The radio base station apparatus 20 has a transmitting/receiving antenna 201, an amplifying section 202, a transmitting/receiving section 203, a baseband signal processing section 204, a call processing section 205, and a transmission path interface 206.

User data to be transmitted from the radio base station apparatus 20 to the user terminal 10 on the downlink is input from the higher station apparatus 30 of the radio base station apparatus 20, into the baseband signal processing section 204, via the transmission path interface 206.

The baseband signal processing section 204 performs PDCP layer processes such as assigning sequence numbers, division and coupling of user data, RLC (Radio Link Control) layer transmission processes such as an RLC retransmission control transmission process, MAC (Medium Access Control) retransmission control, including, for example, a HARQ transmission process, scheduling, transport format selection, channel coding, an Inverse Fast Fourier Transform (IFFT) process, and a precoding process.

The baseband signal processing section 204 furthermore reports control information for radio communication in the cell 50, to the user terminal 10, by a broadcast channel. Broadcast information for communication in the cell 50 includes, for example, the system bandwidth on the uplink or the downlink, identification information of a root sequence (root sequence index) for generating signals of random access preambles of the PRACH.

In the transmitting/receiving section 203, a baseband signal that is output from the baseband signal processing section 204 is subjected to frequency conversion into a radio frequency band. The RF signal is amplified in the amplifying section 202 and output to the transmitting/receiving antenna 201. The transmitting/receiving section 203 transmits downlink signals to the MTC-UE in the above-described predetermined cycle.

The radio base station apparatus 20 receives the transmission wave transmitted from the user terminal 10 in the transmitting/receiving antenna 201. Meanwhile, a radio frequency signal that is received in the transmitting/receiving antenna 201 is amplified in the amplifying section 202, subjected to frequency conversion and converted into a baseband signal in the transmitting/receiving section 203, and is input into the baseband signal processing section 204.

The baseband signal processing section 204 performs an FFT (Fast Fourier Transform) process, an IDFT (Inverse Discrete Fourier Transform) process, error correction decoding, a MAC retransmission control receiving process, and RLC layer and PDCP layer receiving processes for the user data included in the baseband signal that is received on the uplink. The decoded signal is transferred to the higher station apparatus 30 through the transmission path interface 206.

The call processing section 205 performs call processing such as setting up and releasing communication channels, manages the state of the radio base station apparatus 20 and manages the radio resources.

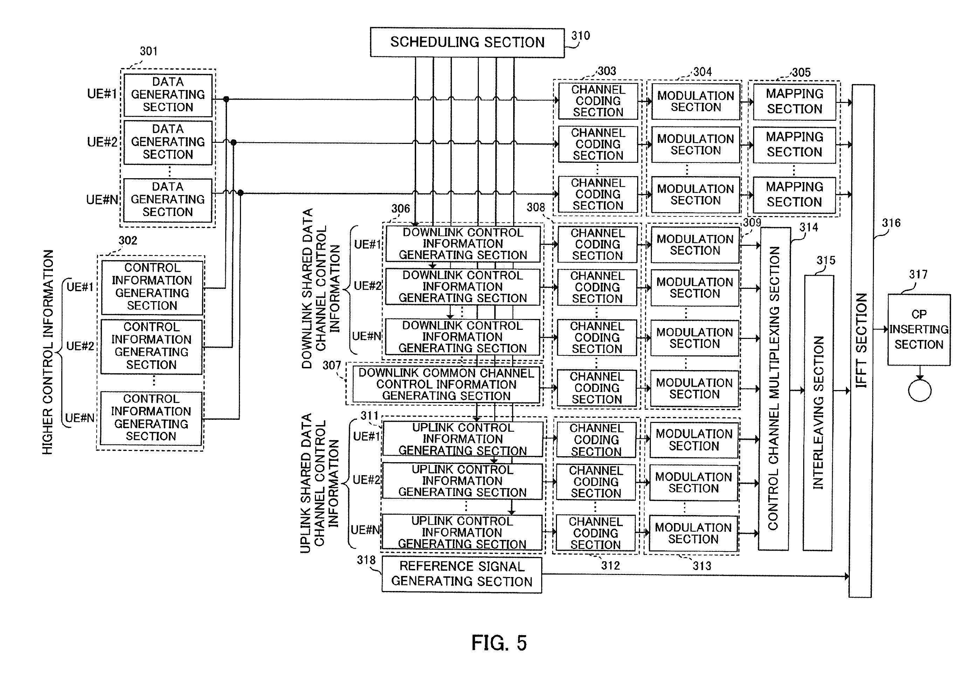

FIG. 5 is a functional block diagram of the baseband signal processing section 204 provided in the radio base station apparatus 20 according to the present embodiment. Transmission data for the user terminals 10, which is wirelessly connected with the radio base station apparatus 20, is transferred from the higher station apparatus 30 to the radio base station apparatus 20.

A control information generating sections 302 generate higher control signals for performing higher layer signaling (for example, RRC signaling), on a per user basis. The data generating sections 301 output the transmission data transferred from the higher station apparatus 30 as user data separately.

The baseband signal processing section 204 has channel coding sections 303, modulation sections 304 and mapping sections 305. The channel coding sections 303 perform channel coding of the shared data channel (PDSCH), which is formed with user data that is output from the data generating sections 301, on a per user basis. The modulation sections 304 modulate the user data having been subjected to channel coding, on a per user basis. The mapping sections 305 map the modulated user data to radio resources.

Moreover, the baseband signal processing section 204 has downlink control information generating sections 306 that generates downlink shared data channel control information, which is user-specific downlink control information, and a downlink common channel control information generating section 307 that generates downlink common control channel control information, which is user-common downlink control information. The downlink control information generating sections 306 generates downlink control information that is formed with resource allocation information determined on a per user basis, MCS information, HARQ information, PUCCH transmission power control commands, and so on.

The baseband signal processing section 204 has channel coding sections 308 and modulation sections 309. The channel coding sections 308 perform channel coding of control information generated in the downlink control information generating sections 306 and the downlink common channel control information generating section 307, on a per user basis. The modulation sections 309 modulate the downlink control information after channel coding.

Furthermore, the baseband signal processing section 204 has uplink control information generating sections 311 that generate uplink shared data channel control information for controlling the uplink shared data channel (PUSCH) on a per user basis, channel coding sections 312 that perform channel coding of the generated uplink shared data channel control information on a per user basis, and modulation sections 313 that modulate the uplink shared data channel control information having been subjected to channel coding on a per user basis.

A reference signal generating section 318 multiplexes cell-specific reference signals (CRSs), which are used for various purposes such as channel estimation, symbol synchronization, CQI measurement, mobility measurement, in resource blocks (RBs) by FDM/TDM, and transmits these. The reference signal generating section 318 also transmits downlink demodulation reference signals (UE-specific RSs).

The downlink control information and uplink control information that are modulated in the modulation sections 309 and 313 on a per user basis are multiplexed in a control channel multiplexing section 314, and are furthermore interleaved in an interleaving section 315. A control signal that is output from the interleaving section 315 and user data that is output from the mapping section 305 are input into an IFFT section 316 as downlink channel signals. Additionally, a downlink reference signal is input into the IFFT section 316. The IFFT section 316 performs an inverse fast Fourier transform of the downlink channel signal and the downlink reference signal and converts the frequency domain signals into time domain signals. A cyclic prefix (CP) inserting section 317 inserts cyclic prefixes in the time sequence signal of the downlink channel signal. Note that a cyclic prefix functions as a guard interval for absorbing the differences in multipath propagation delay. Transmission data, to which cyclic prefixes have been added, is transmitted to the transmitting/receiving section 203.

The scheduling section 310 controls the resource allocation. The scheduling section 310 receives as input transmission data and retransmission commands from the higher station apparatus 30, and also receives as input the channel estimation values and resource block CQIs from a receiving section having measured uplink received signals. The scheduling section 310 schedules downlink allocation information, uplink allocation information and uplink/downlink shared channel signals, with reference to the retransmission commands, channel estimation values and CQIs that are received as input from the higher station apparatus 30. A propagation path in mobile communication varies differently per frequency, due to frequency selective fading. So, upon user data transmission, resource blocks of good communication quality are allocated to the user terminals 10 on a per subframe basis (which is referred to as "adaptive frequency scheduling"). In adaptive frequency scheduling, a user terminal 10 of good propagation path quality is selected and allocated to each resource block. Consequently, the scheduling section 310 allocates resource blocks, with which improvement of throughput is anticipated, using the CQI of each resource block, fed back from each user terminal 10. Moreover, the MCS (coding rate and modulation scheme) that fulfills a predetermined block error rate with the allocated resource blocks is determined. Parameters that satisfy the MCS (coding rate and modulation scheme) determined by the scheduling section 310 are set in the channel coding sections 303, 308 and 312, and the modulation sections 304, 309 and 313.

The scheduling section 310 schedules the LTE-UEs and the MTC-UE separately. The scheduling section 310 allocates downlink signals to the MTC-UE in a predetermined cycle. This predetermined cycle may be a cycle that is determined on the radio base station apparatus side, may be a cycle that is determined in advance, or may be a cycle that is determined on the radio base station apparatus side according to the terminal capability information and so on reported from the MTC-UE. When the predetermined cycle is determined, it is possible to reduce the number of HARQ processes by setting a multiple of the predetermined cycle and the HARQ cycle to be the same. Note that information about the predetermined cycle determined in this way is reported to the MTC-UE by higher layer signaling.

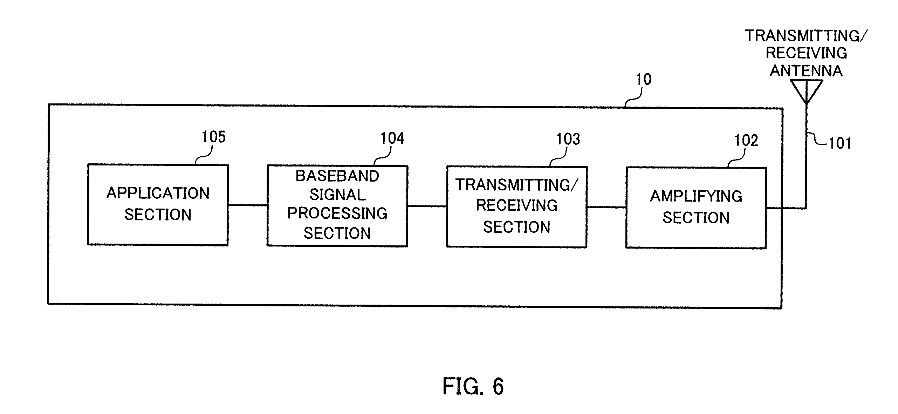

Next, referring to FIG. 6, an overall configuration of the user terminal 10 according to the present embodiment will be described. The user terminal 10 has a plurality of transmitting/receiving antennas 101, an amplifying section 102, a transmitting/receiving section 103, a baseband signal processing section 104, and an application section 105.

Radio frequency signals received in the transmitting/receiving antennas 101 are amplified in the amplifying section 102, subjected to frequency conversion and converted into baseband signals in the transmitting/receiving section 103. The baseband signals are subjected to receiving processes such as an FFT process, error correction decoding, a retransmission control receiving process and so on, in the baseband signal processing section 104. In this downlink data, downlink user data is transferred to the application section 105. The application section 105 performs processes related to higher layers above the physical layer and the MAC layer. In the downlink data, broadcast information is also transferred to the application section 105.

On the other hand, uplink user data is input from the application section 105 into the baseband signal processing section 104. The baseband signal processing section 104 performs a retransmission control (HARQ) transmission process, channel coding, a DFT (Discrete Fourier Transform) process, and an IFFT process. The baseband signals that are output from the baseband signal processing section 104 are converted into a radio frequency band in the transmitting/receiving section 103, and, after that, amplified in the amplifying section 102 and transmitted from the transmitting/receiving antennas 101. When necessary, the transmitting/receiving section 103 reports terminal capability information (memory field information, category information and so on) to the radio base station apparatus by higher layer signaling.

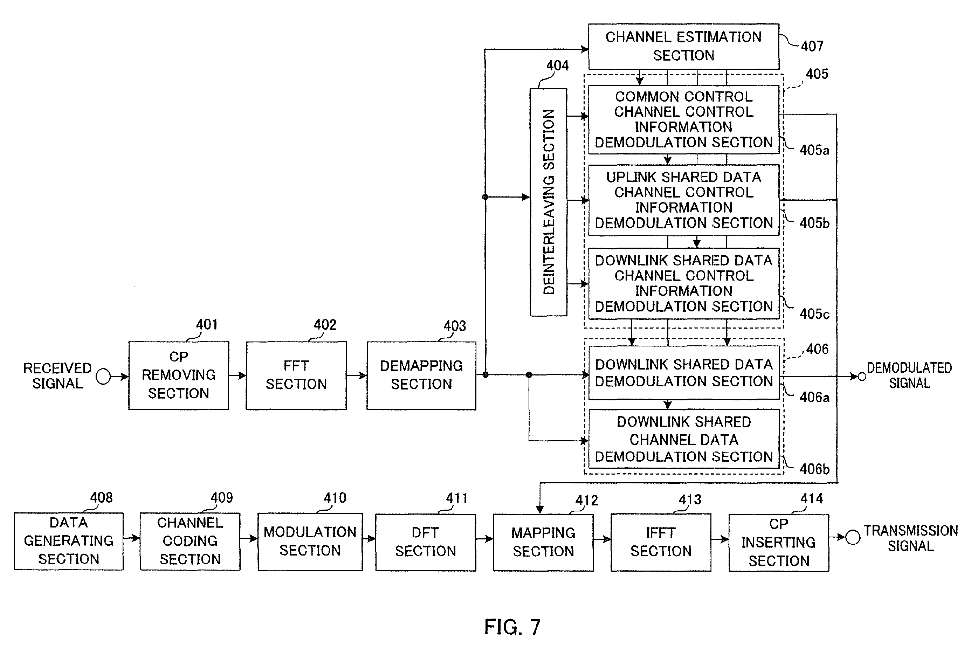

FIG. 7 is a functional block diagram of the baseband signal processing section 104 provided in the MTC-UE 10. A downlink signal that is received as received data from the radio base station apparatus 20 has the CPs removed in a CP removing section 401. The downlink signal, from which the CPs have been removed, is input into an FFT section 402. The FFT section 402 performs a Fast Fourier Transform (FFT) on the downlink signal, converts the time domain signal into a frequency domain signal, and inputs this signal into a demapping section 403. The demapping section 403 demaps the downlink signal, and extracts, from the downlink signal, multiplex control information in which a plurality of pieces of control information are multiplexed, user data and higher control signals. Note that the demapping process by the demapping section 403 is performed based on higher control signals that are received as input from an application section 105. The multiplex control information output from the demapping section 403 is deinterleaved in a deinterleaving section 404.

The baseband signal processing section 104 has control information demodulation sections 405 that demodulate downlink/uplink control information, data demodulation sections 406 that demodulate downlink shared data, and a channel estimation section 407. The control information demodulation section 405 has a common control channel control information demodulation section 405a that demodulates downlink common control channel control information from the downlink control channel, an uplink shared data channel control information demodulation section 405b that performs blind decoding of search spaces from the downlink control channel and demodulates uplink shared data channel control information, and a downlink shared data channel control information demodulation section 405c that performs blind decoding of search spaces from the downlink control channel and demodulates downlink shared data channel control information. The data demodulation section 406 includes a downlink shared data demodulation section 406a that demodulates the user data and higher control signals, and a downlink shared channel data demodulation section 406b that demodulates downlink shared channel data.

The common control channel control information demodulation section 405a extracts common control channel control information, which is user-common control information, by performing a blind decoding process of the common search space of the downlink control channel (PDCCH), a demodulation process, a channel decoding process and so on. The common control channel control information includes downlink channel quality information (CQI), input into a mapping section 412 (described later), and mapped as part of transmission data for the radio base station apparatus 20.

The uplink shared data channel control information demodulation section 405b extracts user-specific uplink control information by performing a blind decoding process of the user-specific search spaces of the downlink control channel (PCCCH), a demodulation process, a channel decoding process and so on. The demodulated downlink control information is input into the downlink shared channel data demodulation section 406b and used to control the uplink shared data channel (PUSCH).

The downlink shared data channel control information demodulation section 405c extracts downlink shared data channel control information, which is user-specific downlink control signals, by performing a blind decoding process of the user-specific search spaces of the downlink control channel (PDCCH), a demodulation process, a channel decoding process and so on. The demodulated downlink shared data channel control information is input into the downlink shared data demodulation sections 406 and used to control the downlink shared data channel (PDSCH).

The downlink shared data demodulation section 406a acquires user data and higher control information based on the downlink shared data channel control information that is input from the downlink shared data channel control information demodulation section 405c. The higher control information (including mode information) is output to a channel estimation section 407. The downlink shared channel data demodulation section 406b demodulates uplink shared channel data on the basis of the uplink shared data channel control information that is input from the uplink shared data channel control information demodulation section 405b.

The channel estimation section 407 performs channel estimation using user terminal-specific reference signals or common reference signals. The estimated channel variation is output to the common control channel control information demodulation section 405a, the uplink shared data channel control information demodulation section 405b, the downlink shared data channel control information demodulation section 405c and the downlink shared data demodulation section 406a. In these demodulation sections, downlink allocation information is demodulated using the estimated channel variation and demodulation reference signals.

The control information demodulation sections 405 demodulate the control information in the downlink signals transmitted from the radio base station apparatus in a predetermined cycle. The above data demodulation sections 406 demodulate the data in the downlink signals transmitted from the radio base station apparatus in a predetermined cycle. Consequently, in frame periods other than the frame periods transmitted from the radio base station apparatus in a predetermined cycle, control information and data are not demodulated. Note that information related to this predetermined cycle is reported from the radio base station apparatus by higher layer signaling.

The baseband signal processing section 104 has, as function blocks of the transmission process system, a data generating section 408, a channel coding section 409, a modulation section 410, a DFT section 411, a mapping section 412, an IFFT section 413, and a CP inserting section 414. The data generating section 408 generates transmission data from bit data that is received as input from the application section 105. The channel coding section 409 performs channel coding processes such as error correction for the transmission data, and the modulation section 410 modulates the transmission data after channel coding by QPSK and so on. The DFT section 411 performs a discrete Fourier transform of the modulated transmission data. The mapping section 412 maps the frequency components of the data symbols after the DFT to subcarrier positions designated by the radio base station apparatus 20. The IFFT section 413 converts the input data, which corresponds to the system band, into time sequence data by performing an inverse fast Fourier transform, and the CP inserting section 414 inserts cyclic prefixes in the time sequence data in data units.

On the other hand, uplink user data is input from the application section 105 to the baseband signal processing section 104. The baseband signal processing section 104 performs a retransmission control transmission process, channel coding, precoding, a DFT process, an IFFT process and so on, and transfers the result to the transmitting/receiving section 106. The baseband signal output from the baseband signal processing section 104 is subjected to a frequency conversion process and converted into a radio frequency band in the transmitting/receiving section 106, and, after that, amplified in the amplifying section 102 and transmitted from the transmitting/receiving antennas 101.

In the system of the above configuration, in the radio base station apparatus, the scheduling section 310 allocates downlink signals to the MTC-UE in a predetermined cycle, and the transmitting/receiving section 203 transmits the allocated downlink signals to the MTC-UE. To the MTC-UE, information related to this predetermined cycle is reported by higher layer signaling. The MTC-UE receives downlink signals from the radio base station apparatus in the predetermined cycle, and demodulates the downlink signals. Note that this predetermined cycle may be a cycle that is determined on the radio base station apparatus side, may be a cycle that is determined in advance, or may be a cycle that is determined on the radio base station apparatus side according to the terminal capability information and so on reported from the MTC-UE. By this means, when the network domain of the MTC system employs the LTE system, it is possible to reduce the cost required for a MTC-UE.

Now, although the present invention has been described in detail with reference to the above embodiments, it should be obvious to a person skilled in the art that the present invention is by no means limited to the embodiments described in this specification. The present invention can be implemented with various corrections and in various modifications, without departing from the spirit and scope of the present invention defined by the recitation of the claims. Consequently, the descriptions in this specification are provided only for the purpose of explaining examples, and should by no means be construed to limit the present invention in any way.

The disclosure of Japanese Patent Application No. 2011-224343, filed on October 11, 2011, including the specification, drawings and abstract, is incorporated herein by reference in its entirety.

**Claims**

1. A radio communication system comprising a radio base station apparatus and a machine communication terminal that performs machine communication with the radio base station apparatus, wherein:

   the radio base station apparatus comprises:

   an allocation section configured to allocate downlink signals to the machine communication terminal in a predetermined cycle; and
   a transmission section configured to transmit the allocated downlink signals to the machine communication terminal; and

   the machine communication terminal comprises:

   a receiving section configured to receive the downlink signals from the radio base station apparatus in the predetermined cycle; and
   a demodulation section configured to demodulate the downlink signals received in the predetermined cycle.

2. The radio communication system according to claim 1, wherein the machine communication terminal monitors the downlink signals only in frame periods of the predetermined cycle.

3. The radio communication system according to claim 1, wherein the radio base station apparatus reports information related to the predetermined cycle to the machine communication terminal by higher layer signaling.

4. The radio communication system according to claim 1, wherein:

   the machine communication terminal reports terminal capability information of the machine communication terminal to the radio base station apparatus by higher layer signaling; and

the radio base station apparatus determines the predetermined cycle on the basis of the terminal capability information.

5. The radio communication system according to claim 1, wherein the predetermined cycle and a hybrid ARQ (Automatic Repeat reQuest) cycle are set to be the same.

6. The radio communication system according to claim 1, wherein the radio base station apparatus performs machine communication with the machine communication terminal and also is wirelessly connected with a user terminal for signal communication.

7. A radio base station apparatus comprising:

an allocation section configured to allocate downlink signals to a machine communication terminal that performs machine communication, in a predetermined cycle; and
a transmission section configured to transmit the allocated downlink signals to the machine communication terminal.

8. The radio base station apparatus according to claim 7, wherein information related to the predetermined cycle is reported to the machine communication terminal by higher layer signaling.

9. The radio base station apparatus according to claim 7, wherein the predetermined cycle is determined on the basis of terminal capability information reported from the machine communication terminal.

10. The radio base station apparatus according to claim 7, wherein the radio base station apparatus performs machine communication with the machine communication terminal and also is wirelessly connected with a user terminal for signal communication.

11. A machine communication terminal comprising:

a receiving section configured to receive downlink signals from a radio base station apparatus in a predetermined cycle; and
a demodulation section configured to demodulate the downlink signals received in the predetermined cycle.

12. The machine communication terminal according to claim 11, wherein the downlink signals are monitored only in frame periods of the predetermined cycle.

13. The machine communication terminal according to claim 11, wherein terminal capability information of the machine communication terminal is reported to the radio base station apparatus by higher layer signaling.

14. A radio communication method in a radio communication system comprising a radio base station apparatus and a machine communication terminal that performs machine communication with the radio base station apparatus, the radio communication method comprising the steps of:

at the radio base station apparatus:

allocating downlink signals to the machine communication terminal in a predetermined cycle; and
transmitting the allocated downlink signals to the machine communication terminal; and
at the machine communication terminal:

receiving the downlink signals from the radio base station apparatus in the predetermined cycle; and
demodulating the downlink signals received in the predetermined cycle.

EP 2 768 261 A1

FIG. 1

12

PDCCH

DL

PDSCH

← MTC-UE →

← LTE-UE →

FIG. 2A

UL

PUCCH

← MTC-UE →

← LTE-UE →

FIG. 2B

EP 2 768 261 A1

| 10 | 11 | 12 | 13 | 14 | 15 | 16 | 17 | 18 | 19 | 20 | 21 | 22 | 23 | 24 | 25 | 26 | 27 | 28 | 29 | 30 |

SFN →

## FIG. 3A

EP 2 768 261 A1

RETRANSMISSION

RETRANSMISSION

| 10 | 11 | 12 | 13 | 14 | 15 | 16 | 17 | 18 | 19 | 20 | 21 | 22 | 23 | 24 | 25 | 26 | 27 | 28 | 29 | 29 |

NAK#1          NAK#2

SFN →

## FIG. 3B

FIG. 4

EP 2 768 261 A1

FIG. 5

TRANSMITTING/
RECEIVING
ANTENNA

10

105

APPLICATION
SECTION

104

BASEBAND
SIGNAL
PROCESSING
SECTION

103

TRANSMITTING/
RECEIVING
SECTION

102

AMPLIFYING
SECTION

101

FIG. 6

FIG. 7

**EP 2 768 261 A1**

| | **INTERNATIONAL SEARCH REPORT** | International application No. |
|---|---|---|
| | | PCT/JP2012/070887 |

**A. CLASSIFICATION OF SUBJECT MATTER**
*H04W52/02*(2009.01)i, *H04W4/04*(2009.01)i, *H04W72/04*(2009.01)i

According to International Patent Classification (IPC) or to both national classification and IPC

**B. FIELDS SEARCHED**

Minimum documentation searched (classification system followed by classification symbols)
H04W52/02, H04W4/04, H04W72/04

Documentation searched other than minimum documentation to the extent that such documents are included in the fields searched
Jitsuyo Shinan Koho          1922–1996     Jitsuyo Shinan Toroku Koho    1996–2012
Kokai Jitsuyo Shinan Koho    1971–2012     Toroku Jitsuyo Shinan Koho    1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | CATT, "Synchronisation for triggering detached MTC devices", 3GPP TSG SA WG2 Meeting #84 TD S2-111808, 2011.04.15 | 1–14 |
| Y | JP 2008-306267 A  (Sharp Corp.), 18 December 2008 (18.12.2008), paragraphs [0004] to [0007] (Family: none) | 1–14 |
| Y | WO 2007/145006 A1  (Mitsubishi Electric Corp.), 21 December 2007 (21.12.2007), paragraphs [0145] to [0153] & US 2009/0180414 A1      & EP 2031775 A1 & WO 2007/144956 A1      & KR 10-2008-0097395 A & CN 101361298 A | 4,9,13 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 September, 2012 (04.09.12) | 11 September, 2012 (11.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/070887

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-141676 A  (NEC Corp.),<br>24 June 2010 (24.06.2010),<br>paragraphs [0023] to [0067]<br>(Family: none) | 5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011224343 A

**Non-patent literature cited in the description**

- MTC Communication Aspects. *3GPP, TS 22. 368 (V10.5.0),* June 2011